# EUROPEAN PATENT SPECIFICATION

(11) **EP 0 586 067 B1**
(45) Date of publication and mention of the grant of the patent: **08.05.1996**
(21) Application number: 93305642.6
(22) Date of filing: 19.07.1993
(51) Int. Cl.: F16K 15/14, F16K 24/06

(54) **Relief valve**
Entlastungsventil
Soupape de détente

(30) Priority: 18.08.1992 ZA 926206
(43) Date of publication of application: 09.03.1994
(73) Proprietor: ZARINA HOLDINGS CV, NL-1017 PS Amsterdam (NL)
(72) Inventor: Atkins, David Seagrave c/o John & Kernick, P O Box 727 Johannesburg (ZA)
(74) Representative: Allen, William Guy Fairfax

(56) References cited:
- WO-A-86/04399
- US-A- 2 600 731
- US-A- 2 606 032
- US-A- 2 631 049
- US-A- 4 726 390
- US-A- 5 033 504

## Description

This invention relates to a relief valve for liquids and more particularly to a valve which may conveniently be used with domestic swimming pool filtration equipment.

Today many domestic swimming pools have automatic cleaners which operate through the suction provided by the pool filtration pump. Water entraining debris and other dirt is sucked from the submerged surfaces of the pool through the cleaner to a filtration unit and returned, clean, to the pool.

The cleaners referred to operate best at a certain flow rate and to maintain this flow rate a relief valve is usually included in the cleaner apparatus and has a marked effect on the operation of the cleaner.

One problem with known type of relief valves used for the purpose above set out further is that they are often either blocked or held too widely open by debris entrapped therein. A second problem which often occurs is that on starting of the filtration equipment the pump induces a flow which is insufficient to cause the machine to work but does induce flow through the relief valve.

It is the object of the present invention to provide a simple relief valve which will at least mitigate the above disadvantages.

US-A-5,033,504, on which the preamble of claim 1 is based, discloses a relief valve comprising a flexible diaphragm which is slidable axially in a by-pass passage of a flow passage and is perforated to permit one-way flow therethrough.

According to the present invention there is provided a relief valve for relieving the flow of liquid flowing through the valve in order to maintain a certain flow rate and for connection in a liquid flow line, the valve comprising a body having an inlet in the form of a tube opening into the body and an outlet,
characterised in that the valve has an annular flexible diaphragm with its outer periphery secured to the wall of the body and its inner periphery either frictionally engaged around or aligned with and frictionally engageable around the inlet.

Further features of this invention provide for the diaphragm to be flexible into the body only and for its inner periphery to be held in a preloaded condition around a fixed inlet and for the tubular inlet to taper inwardly inside the body from the area of engagement of the diaphragm.

The invention also provides the inlet to be supported for axial movement in the body against a resilient bias and disengaged from the diaphragm when there is no flow through the valve and for the inlet to be adapted for connection into a flexible suction hose.

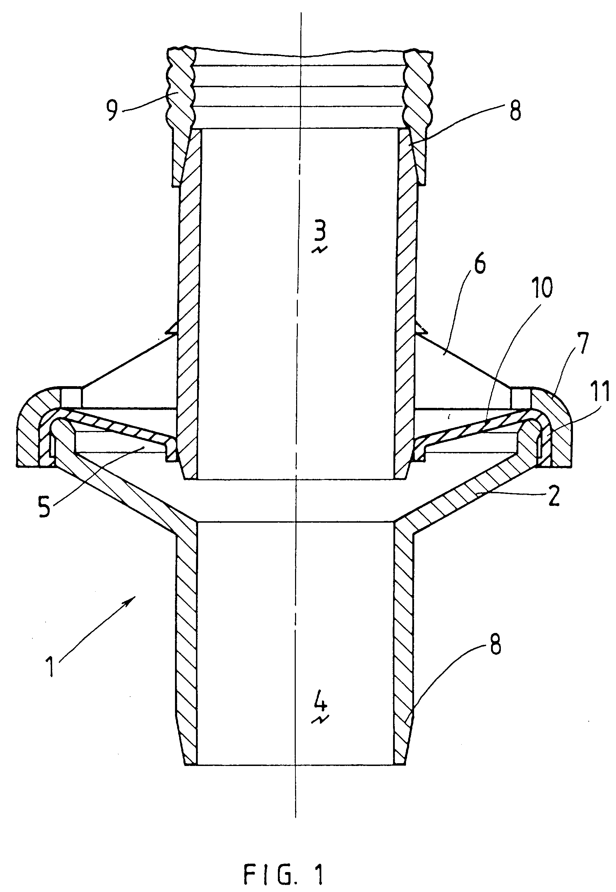

A preferred embodiment of this invention is described below with reference to the accompanying drawings which show in
- Fig 1: a longitudinal cross-sectional view through the valve; and
- Fig 2: a similar view through an alternative embodiment.

In this embodiment the relief valve (1) is particularly suitable for connection into the flexible hose of an automatic swimming pool cleaner. It will preferably be located in the swimming pool weir so that the relief flow through the valve can provide a surface skimming effect to remove floating particles from the surface of the water.

The valve (1) consists of a body (2) having an inlet (3) in the form of a tube opening into the body and an outlet (4).

The inlet forms with the end of the body (2) adjacent thereto an annular space (5). The tubular inlet (3) carries a suitable spider (6), preferably with only three legs, supporting a clamping flange (7). This gives a flow area with minimum restriction.

The outer ends (8) of the inlet and the outlet which extends from the body are shaped as male components for connection into the usual form of flexible hose (9) used with swimming pools of this kind and the weir outlet for such pools.

As will be seen from the drawing the body (2) of the valve (1) has a stepped configuration.

Between the inlet (3) and the adjacent end of the body is located a resilient diaphragm (10) spanning the annular space (5). The diaphragm (10) has a turned over outer periphery (11) which locates over the outer end of the body (2) where it is held in place by the forced engagement of the clamping flange as shown.

The diaphragm (10) is secured around its outer periphery (11) to the body (2) and its inner periphery is in resilient engagement with the tubular inlet (3). This engagement is under a predetermined pre-loading which is provided by making the internal diameter of the diaphragm (10) smaller than the outer diameter of the inlet (3).

It will be appreciated that, in use, when the pressure in the body is reduced below a predetermined amount the edge of the diaphragm (10) will flex inwardly into the body providing an annular opening for the flow of relief water by-passing the swimming pool cleaner into the suction hose.

Because of the preloading of the diaphragm the relief valve cannot open unless there is a predetermined flow through the valve and this flow will be chosen to be sufficient to bring the swimming pool cleaner into operation.

The tubular inlet (3) is tapered inwardly inside the body as illustrated and this has a positive effect on the operation of the valve. Under high flow conditions the valve will provide greater relief than would be the case if the tubular inlet (3) was not tapered inwardly from the normal area of contact between the diaphragm (10) and the tubular inlet (3).

The annular space between the diaphragm and the inlet when the valve is operating is very unlikely to be blocked by any debris which may pass into the flexible hose.

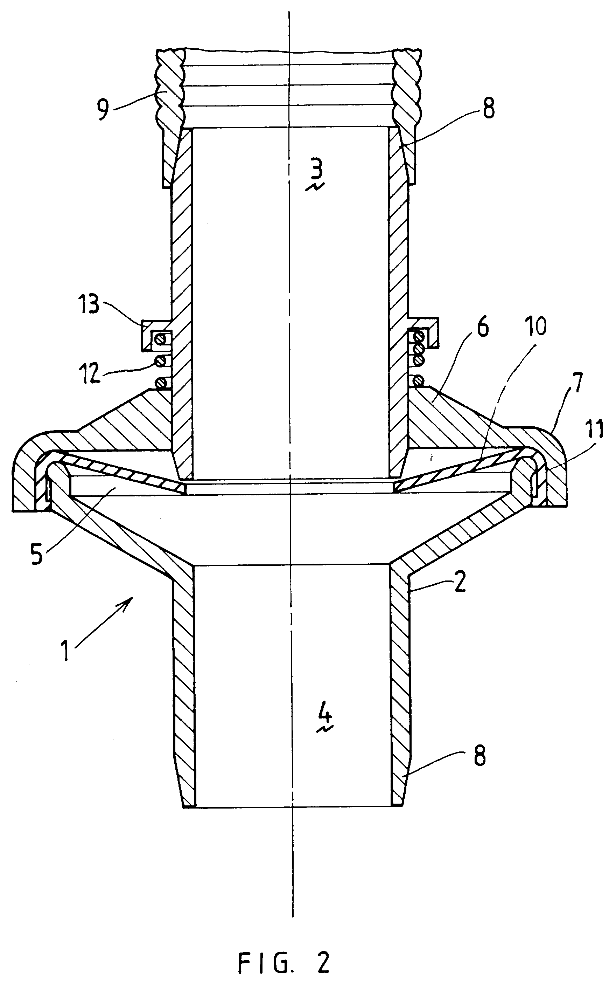

An alternative embodiment is illustrated in Fig 2 of the drawings. In this form the inlet (3) is slidably mounted in the spider (6). A resilient bias shown as a compression spring (12) is located between the spider (6) and a suitably positioned stop (13) on the inlet. Any other suitable resilient bias may be used.

In the condition of no flow through the valve illustrated the inlet is aligned with but not engaged by the diaphragm. This construction has the advantage that debris which may have come to rest on the diaphragm (10) when there is no flow through the valve will be drawn through the valve as an initial reduced pressure is applied to the valve. Further reduction in pressure will cause the inlet (3) to move against the compression spring (12) and engage in the diaphragm (10) whereafter the valve will operate as above described.

It will be understood that the preloading of the assembled diaphragm will be caused by the shape to which it is moulded and the inner periphery may include a bead to prevent any tendency towards tearing while the concave shape of the assembled diaphragm will also be ensured when it is moulded.

The material from which the diaphragm is moulded will be chosen from suitable plastics material. The best material for particular circumstances of use will be readily determined by those skilled in the art.

## Claims

1. A relief valve for relieving the flow of liquid flowing through the valve in order to maintain a certain flow rate and for connection in a liquid flow line, the valve comprising a body (2) having an inlet (3) in the form of a tube opening into the body (2) and an outlet (4),
characterised in that the valve has an annular flexible diaphragm (10) with its outer periphery secured to the wall of the body and its inner periphery either frictionally engaged around or aligned with and frictionally engageable around the inlet.

2. A relief valve as claimed in claim 1, wherein the diaphragm (10) is flexible into the body (2) only.

3. A relief valve as claimed in claim 1 or 2, wherein that the inner periphery of the diaphragm (10) is located in a preloaded condition around a fixed inlet.

4. A relief valve as claimed in either claims 1 or 2, wherein the inlet (3) is supported for axial movement in the body (2) against a resilient bias (12) and disengaged from the diaphragm (10) when there is no flow through the valve.

5. A relief valve as claimed in any one of the preceding claims, wherein the tubular inlet (3) tapers inwardly inside the body (2) from the area of normal engagement of the diaphragm (10).

6. A relief valve as claimed in any one of the preceding claims, wherein the tubular inlet (3) carries a spider (6) supporting a clamping flange (7) to secure the outer periphery of the diaphragm (10) to the end of the body (2).

7. A relief valve as claimed in any one of the preceding claims, wherein the inlet (3) is adapted for connection into a flexible suction hose.

8. A swimming pool automatic cleaner including a relief valve according to any one of the preceding claims.

## Patentansprüche

1. Entlastungsventil zur Entlastung des durch das Ventil strömenden Flüssigkeitsstroms mit dem Zweck, eine bestimmte Durchflußrate aufrechtzuerhalten, und zum Einbinden in eine Flüssigkeitsströmungsleitung, wobei das Ventil einen Körper (2) mit einem Einlaß (3) in Form eines sich in den Körper (2) öffnenden Rohrs und mit einem Auslaß (4) umfaßt,
dadurch gekennzeichnet, daß das Ventil eine ringförmige flexible Membran (10) aufweist, deren Außenrand an der Wandung des Körpers gesichert ist und deren Innenrand entweder rings um den Einlaß mit diesem in Reibeingriff steht oder mit dem Einlaß ausgerichtet ist und rings um den Einlaß mit diesem in Reibeingriff bringbar ist.

2. Entlastungsventil nach Anspruch 1, bei dem die Membran (10) nur in den Körper (2) hinein flexibel ist.

3. Entlastungsventil nach Anspruch 1 oder 2, bei dem der Innenrand der Membran (10) in einem vorgespannten Zustand um einen festen Einlaß herum angeordnet ist.

4. Entlastungsventil nach Anspruch 1 oder 2, bei dem der Einlaß (3) entgegen einer elastischen Vorspannung (12) axial beweglich in dem Körper (2) gelagert ist und außer Eingriff mit der Membran (10) ist, wenn keine Strömung durch das Ventil vorhanden ist.

5. Entlastungsventil nach einem der vorhergehenden Ansprüche, bei dem sich der rohrförmige Einlaß (3) innerhalb des Körpers (2) vom Bereich normalen Eingriffs der Membran (10) aus nach innen verjüngt.

6. Entlastungsventil nach einem der vorhergehenden Ansprüche, bei dem der rohrförmige Einlaß (3) ein Armkreuz (6) trägt, welches einen Klemmflansch (7) zur Sicherung des Außenrands der Membran (10) am Ende des Körpers (2) hält.

7. Entlastungsventil nach einem der vorhergehenden Ansprüche, bei dem der Einlaß (3) zur Einbindung in einen flexiblen Saugschlauch ausgeführt ist.

8. Automatischer Schwimmbeckenreiniger mit einem Entlastungsventil nach einem der vorhergehenden Ansprüche.

## Revendications

1. Soupape de détente pour décharger un flux de liquide s'écoulant à travers la soupape afin de maintenir un débit d'écoulement donné, prévue pour se raccorder dans une conduite de liquide, la soupape comprenant un corps (2) doté d'un orifice d'entrée (3) ayant la forme d'un tube s'ouvrant dans le corps (2), et d'un orifice de sortie (4),
caractérisée en ce que la soupape comporte un diaphragme annulaire flexible (10) dont la circonférence externe est fixée à la paroi du corps et dont la circonférence interne est soit montée en friction autour de l'entrée, soit alignée et montée en friction autour de celle-ci.

2. Soupape de détente selon la revendication 1, dans laquelle le diaphragme (10) n'est flexible que sur le corps (2).

3. Soupape de détente selon l'une des revendications 1 ou 2, dans laquelle la circonférence interne du diaphragme (10) est montée avec une précontrainte autour d'un orifice d'entrée fixe.

4. Soupape de détente selon l'une quelconque des revendications 1 ou 2, dans laquelle l'orifice d'entrée (3) est supporté dans son mouvement axial dans le corps (2) en s'opposant à l'action d'un moyen élastique de rappel (12) et séparé du diaphragme (10) en l'absence d'écoulement dans la soupape.

5. Soupape de détente selon l'une quelconque des revendications précédentes, dans laquelle l'orifice d'entrée tubulaire (3) est conique en direction de l'intérieur du corps (2) à partir de la zone d'engagement normal du diaphragme (10).

6. Soupape de détente selon l'une quelconque des revendications précédentes, dans laquelle l'orifice d'entrée tubulaire (3) comporte un croisillon (6) supportant une bride de serrage (7) pour fixer la circonférence extérieure du diaphragme (10) sur l'extrémité du corps (2).

7. Soupape de détente selon l'une quelconque des revendications précédentes, dans laquelle l'orifice d'entrée (3) est prévu pour se raccorder à un tuyau d'aspiration flexible.

8. Dispositif automatique de nettoyage pour piscine comportant une soupape de détente selon l'une quelconque des revendications précédentes.
